# EUROPÄISCHE PATENTSCHRIFT

(11) **EP 3 746 895 B1**
(45) Veröffentlichungstag und Bekanntmachung des Hinweises auf die Patenterteilung: **13.09.2023**
(21) Anmeldenummer: 18702485.6
(22) Anmeldetag: 30.01.2018
(51) Int. Cl.: G06F 16/25, G06Q 10/063, G06F 11/30, G06F 17/40

(54) **VERFAHREN ZUM ERZEUGEN VON PROZESSPROTOKOLLEN IN EINER VERTEILTEN IT-INFRASTRUKTUR**
METHOD FOR GENERATING PROCESS PROTOCOLS IN A DISTRIBUTED IT INFRASTRUCTURE
PROCÉDÉ DESTINÉ À PRODUIRE DES PROTOCOLES DE PROCESSUS DANS UNE INFRASTRUCTURE DE TI RÉPARTIE

(43) Veröffentlichungstag der Anmeldung: 09.12.2020
(73) Patentinhaber: Celonis SE, 80333 München (DE)
(72) Erfinder: KLENK, Martin, 80639 München (DE)
(74) Vertreter: 2s-ip Schramm Schneider Bertagnoll Patent- und Rechtsanwälte Part mbB
(86) Internationale Anmeldenummer: PCT/EP2018/052245
(87) Internationale Veröffentlichungsnummer: WO 2019/149339

(56) Entgegenhaltungen:
- EP-A1- 3 139 272
- US-A1- 2014 040 182
- US-A1- 2017 228 229
- US-B2- 9 286 329
- US-B2- 9 325 576
- LUIS M VAQUERO ET AL: "Towards Runtime Reconfiguration of Application Control Policies in the Cloud", JOURNAL OF NETWORK AND SYSTEMS MANAGEMENT, KLUWER ACADEMIC PUBLISHERS-PLENUM PUBLISHERS, NE, Bd. 20, Nr. 4, 8. August 2012 (2012-08-08) , Seiten 489-512, XP035119004, ISSN: 1573-7705, DOI: 10.1007/S10922-012-9251-3

## Beschreibung

### Gebiet der Erfindung

Die Erfindung betrifft ein Verfahren zum Erzeugen von Prozessprotokollen in einer verteilten IT-Infrastruktur.

### Hintergrund der Erfindung

Es ist bekannt, Prozesse, die in einem Computersystem oder mit Hilfe eines Computersystems ausgeführt werden, zu analysieren. Ein Prozess kann hierbei mehrere Prozessschritte umfassen. Jeder Prozessschritt erzeugt in der Regel Daten, die in dem Computersystem gespeichert werden. Aus diesen gespeicherten Daten können Informationen extrahiert werden, die für die Analyse der Prozesse relevant sind. Bei den Prozessen kann es sich auch um Geschäftsprozesse handeln. Auf diese Weise können beispielsweise die in einem ERP-System durchgeführten Transaktionen analysiert werden. Bei den Prozessen kann es sich aber auch um technische Prozesse handeln.

Die Analyse der Prozesse erfolgt hierbei im Quellsystem, das heißt in dem Computersystem, in dem die Daten erzeugt und gespeichert werden. Nachteilig hierbei ist, dass nur Prozesse, die in dem jeweiligen Quellsystem ausgeführt wurden, analysiert werden können. Weiter nachteilig ist hierbei, dass eine Prozessanalyse abhängig von der Datenmenge sehr rechenintensiv sein kann, sodass eine Analyse in vielen Fällen nicht effizient durchgeführt werden kann, wenn das Quellsystem nicht über entsprechende Ressourcen verfügt.

Um diesem Nachteil Rechnung zu tragen, kann die Analyse der Prozesse alternativ auch in einem anderen Computersystem (nachfolgend auch als Server-System bezeichnet), das über entsprechende Ressourcen verfügt, durchgeführt werden. Die von den ausgeführten Prozessen erzeugten und im Quellsystem (nachfolgend auch als Client-System bezeichnet) gespeicherten Daten werden hierfür zunächst vom Quellsystem in das Server-System transferiert. Auf diese Weise können auch Prozesse, die in unterschiedlichen Quellsystemen ausgeführt wurden, in dem Server-System analysiert werden.

Nachteilig hierbei ist einerseits, dass alle Daten, die zu den zu analysierenden Prozessen gehören, vom Quellsystem in das Server-System transferiert werden müssen. Dabei werden unnötiger Weise auch Daten transferiert, die für die Analyse nicht benötigt werden, da in vielen Fällen das Quellsystem keine Informationen darüber hat, welche Daten der zu analysierenden Prozessen das Server-System konkret benötigt.

Zudem ist die Zuverlässigkeit der Kommunikationsverbindung zwischen dem Quellsystem und dem Server-System maßgeblich durch die verfügbaren Kommunikationsprotokolle bestimmt. Die Übertragungsgeschwindigkeit ist maßgeblich durch die Bandbreite der Kommunikationsverbindung bestimmt.

Andererseits ist der Transfer der Daten mit einem erheblichen Aufwand verbunden, wenn das Server-System nicht direkt auf das Quellsystem zugreifen kann. Die Daten müssen dann zunächst im Quellsystem exportiert und anschließend in das Server-System importiert werden. Die hierfür erforderliche Provisionierung bzw. Konfiguration der Quellsysteme bzw. Client-Systeme ist technisch komplex und aufwändig, insbesondere dann, wenn die Client-Systeme und die Server-Systeme, auf denen die Prozessanalyse durchgeführt wird, unterschiedlichen Organisationen zugeordnet sind. Wenn beispielsweise ein Dienstleister die Prozessanalyse für eine Anzahl von Kunden durchführt, muss jeder Kunde die für den Datentransfer erforderliche Provisionierung des jeweiligen Client-Systems durchführen. Ad-hoc-Prozessanalysen sind hierbei nicht mehr möglich oder werden jedenfalls erheblich erschwert.

Die US 2014/0040182 A1 betrifft ein Verfahren zum zentralen Sammeln von Daten in einem Data Center aus über das Internet verbundenen Remote-Systemen bzw. Client-Systemen. Das Verfahren basiert auf einem speziellen Kommunikationsprotokoll welches in Form einer abstrahierten Message Passing Architecture, wie etwa dem Java Message Service (JMS), bereitgestellt wird. Über den JMS werden Daten und Konfigurationsnachrichten gesendet. Dabei ermöglicht das JMS Client-Systeme automatisch Verbindungen zum Data Center für die Übertragung von Nachrichten aufzubauen. In den Client-Systemen extrahiert ein Client-Agent relevante Business Daten, wobei die Konfigurationen zur Datenextraktion im Data Center in einer Konfigurationsdatenbank gespeichert werden und dem Client-Agenten über einen Definition Server übermittelt werden.

Aus der EP 3 139 272 A1 ist zudem ein Verfahren zum Speichern von Prozessdaten bekannt, wobei die Prozessdaten in Form von Prozessprotokollen derart gespeichert werden, dass nachfolgend eine effiziente Analyse der Prozessdaten ermöglicht wird.

### Aufgabe der Erfindung

Aufgabe der Erfindung ist es daher, Lösungen bereitzustellen, die eine effizientere und einfachere Analyse von Prozessen, die in unterschiedlichen Computersystemen ausgeführt wurden, ermöglichen.

### Erfindungsgemäße Lösung

Diese Aufgabe wird erfindungsgemäß durch ein Verfahren nach dem unabhängigen Anspruch gelöst. Vorteilhafte Ausgestaltungen und Weiterbildungen der Erfindung sind in den abhängigen Ansprüchen angegeben.

Bereit gestellt wird demnach ein Verfahren zum Erzeugen von Prozessprotokollen aus Prozessdaten in einem IT-System mit zumindest einem Extraktionsknoten, zumindest einem Speicherknoten und zumindest einem Transformationsknoten, wobei die Prozessdaten in zumindest einem Client-System des IT-Systems gespeichert sind, wobei
- in einem Server-System des IT-Systems ein Anwendungskatalog ausgeführt wird und
- mit dem Anwendungskatalog eine Anzahl von Anwendungsvorlagen verwaltet werden, wobei jede Anwendungsvorlage ein Installationsprogramm und Konfigurationsdaten umfasst, wobei
- mit dem Installationsprogramm die jeweilige Anwendungsvorlage instanziiert, konfiguriert und in dem Server-System als Anwendung zur Ausführung gebracht wird,
- die ausgeführten Anwendungen von einer Runtime-Komponente, die auf dem Server-System ausgeführt wird, überwacht und verwaltet werden, und
- gemäß einer Anzahl von Steueranweisungen, die auf den Knoten ausgeführt werden, aus den Prozessdaten die Prozessprotokolle ermittelt werden, wobei die Konfigurationsdaten der jeweiligen Anwendung Informationen darüber umfassen, auf welchem Knoten welche Steueranweisungen ausgeführt werden.

Mit Hilfe des Anwendungskataloges wird ein einfaches Provisionieren bzw. Konfigurieren einer verteilten IT-Infrastruktur, bestehend aus einem Server-System und einer Anzahl von Client-Systemen, ermöglicht, um Prozessprotokolle aus Prozessdaten, die in der Anzahl von Client-Systemen gespeichert sind, zu erzeugen. Für jeden Kunden bzw. für jedes Client-System wird zumindest eine Anwendung auf dem Server-System zur Ausführung gebracht. Jede Anwendung wird gemäß vorbestimmter Kundeneinstellungen, die Bestandteil von Konfigurationsdaten sein können, kunden- bzw. clientspezifisch konfiguriert. Da die Konfigurationsdaten (z.B. Adresse des Client-Systems, Autorisierungsverfahren, Passwörter, Spracheinstellungen, etc.) einer spezifischen Anwendung (spezifische Instanz einer Anwendungsvorlage) und damit einem spezifischen Client-System (Kunden) zugeordnet sind und die Konfigurationsdaten angeben, auf welchem Knoten (Extraktionsknoten, Speicherknoten, Transformationsknoten) welche Steueranweisungen ausgeführt werden, wird durch das Instanziieren einer Anwendung auf technisch besonders einfache Weise eine dient- bzw. kundenspezifische Provisionierung der verteilten IT-Infrastruktur ermöglicht. Beispielsweise kann durch die Konfigurationsdaten festgelegt werden, dass der Extraktionsknoten auf dem Client-System und der Speicher- und Transformationsknoten auf dem Server-System ausgeführt werden.

Einerseits wird es hierdurch dem Kunden ermöglicht, die kundenspezifische IT-Infrastruktur ohne weitere Konfiguration in die verteilte IT-Infrastruktur einzubinden. Andererseits profitiert der Kunde von optimierten Übertragungsprotokollen zwischen Client-System, Extraktionsknoten und Speicherknoten ohne hierfür Änderungen in der IT-Infrastruktur vornehmen zu müssen.

Durch die Abstraktion der verteilten Extraktionsknoten kann dieselbe Extraktions-Infrastruktur verwendet werden, um alle vom Kunden instanziierten Applikationen und deren Extraktionen verarbeiten zu können.

Das zumindest eine Client-System kann über ein Kommunikationsnetzwerk mit dem Server-System verbunden sein, wobei die Prozessdaten durch Ausführen zumindest eines Prozesses in dem zumindest einen Client-System erzeugt und in dem Client-System gespeichert werden und Bestandteil von in dem Client-System gespeicherten Quelldaten sind, wobei die Prozessdaten Daten einer Anzahl von Prozessinstanzen umfassen, wobei die Daten einer Prozessinstanz einen in dem Client-System ausgeführten und eine Anzahl von Prozessschritten umfassenden Prozess repräsentieren.

Ein Client-System ist ein Computer-System z.B. eines Kunden eines Dienstleisters, der für den Kunden die Prozessanalyse durchführt. Ein Server-System ist ein Computer-System z.B. des Dienstleisters. Bei dem Server-System kann es ich um ein Cloud-Computing-System handeln. Bei den Client-Systemen kann es sich ebenfalls um Cloud-Computing-Systeme handeln. Client-Systeme und Server-System bilden zusammen die verteilte IT-Infrastruktur (IT-System) bestehend aus Extraktionsknoten, Speicherknoten und Transformationsknoten.

Vorteilhaft ist es, wenn
- in zumindest einem Client-System ein erster Extraktionsknoten ausgeführt wird,
- in dem Server-System zumindest ein Transformationsknoten und zumindest ein Speicherknoten ausgeführt werden,
- der erste Extraktionsknoten gemäß den Steueranweisungen aus den im Client-System gespeicherten Quelldaten die Prozessdaten extrahiert und die extrahierten Prozessdaten an den Speicherknoten des Server-Systems überträgt,
- der Speicherknoten die extrahierten Prozessdaten von dem Extraktionsknoten entgegennimmt und in einer Speichereinrichtung des Server-Systems speichert, und
- der Transformationsknoten gemäß den Steueranweisungen aus den in der Speichereinrichtung gespeicherten Prozessdaten das Prozessprotokoll erzeugt und das erzeugte Prozessprotokoll zum Speichern in der Speichereinrichtung an den Speicherknoten überträgt.

Durch Ausführen des ersten Extraktionsknotens auf dem Client-System wird das Client-System in die verteilte IT-Infrastruktur "eingebunden". Die Steuerung des auf dem Client-System ausgeführten ersten Extraktionsknotens erfolgt mittels der Steueranweisungen, wobei durch die dem Client-System zugeordnete und auf dem Server-System ausgeführte Anwendung festgelegt ist, welche Steueranweisungen auf dem ersten Extraktionsknoten ausgeführt werden.

Das Extrahieren der Prozessdaten auf dem Client-System und das Übertragen der extrahierten Prozessdaten an den Speicherknoten des Server-Systems wird also durch entsprechende Anwendung gesteuert, die wiederum von der Runtime-Komponente des Server-Systems überwacht wird. Da der auf dem Client-System ausgeführte erste Extraktionsknoten von der entsprechenden Anwendung auf dem Server-System gesteuert wird, ist es zudem möglich, dass in dem Client-System nur jene Prozessdaten aus den Quelldaten extrahiert werden, die für die Analyse der Prozessdaten tatsächlich benötigt werden - es wird dadurch vermieden, dass für die Analyse nicht benötigte Daten vom Client-System an das Server-System übertragen werden.

Vorteilhaft ist hierbei, dass für ein "Einbinden" des Client-Systems in die verteilte IT-Infrastruktur lediglich eine Anwendung aus dem Anwendungskatalog instanziiert werden muss und der entsprechende Knoten des Client-Systems (z.B. ein Extraktionsknoten) ausgeführt werden muss.

Des Weiteren vorteilhaft ist hierbei, dass die Kommunikationsstrecke vom Client-System zum Extraktionsknoten (wenn der Extraktionsknoten im Client-System ausgeführt wird) signifikant verkürzt und ein optimales Kommunikationsprotokoll und Kompressionsverfahren zur Übertragung der Daten zum Speicherknoten des Server-Systems gewählt werden kann. Hierdurch wird die Abhängigkeit zu vom Client-System bereitgestellten Kommunikationsprotokollen und Austauschformaten vermieden.

Beispielhaft kann hier eine Legacy-Datenbank als Client-System genannt werden, deren Verbindung keine Kompression unterstützt. Durch die Installation eines Extraktionsknotens im Client-System kann das leistungsfähige Netzwerk innerhalb der Kundeninfrastruktur des Client-Systems verwendet werden, um eine Verbindung zur Legacy-Datenbank aufzubauen. In dem Extraktionsknoten können die Daten dann paketiert und komprimiert werden und anschließend über ein weniger leistungsfähiges WAN an den Speicherknoten des Server-Systems übertragen werden.

Der erste Extraktionsknoten kann vorgeben, welches Kommunikationsprotokoll für das Übertragen der extrahierten Prozessdaten an den Speicherknoten des Server-Systems verwendet wird.

Der erste Extraktionsknoten kann vor dem Übertragen der extrahierten Prozessdaten an den Speicherknoten des Server-Systems die extrahierten Prozessdaten aufbereiten, insbesondere optimieren und/oder komprimieren.

Vorteilhaft ist es, wenn das Server-System von mehreren Client-Systemen gemeinsam nutzbar ist.

Vorteilhaft ist es zudem, wenn der Transformationsknoten das Prozessprotokoll gemäß einer vorbestimmten Datenstruktur erzeugt, wobei die vorbestimmte Datenstruktur zumindest umfasst:
- ein erstes Attribut, in dem eine eindeutige Kennung der Prozessinstanz des jeweiligen Prozessschrittes gespeichert ist,
- ein zweites Attribut, in dem eine Kennung des jeweiligen Prozessschrittes gespeichert ist, und
- ein drittes Attribut, in dem eine Reihenfolge der Prozessschritte innerhalb einer Prozessinstanz gespeichert ist,
wobei der Speicherknoten in der Datenstruktur die zu einer Prozessinstanz gehörenden Prozessschritte sortiert nach dem dritten Attribut in der Speichereinrichtung speichert.

Hierbei ist es insbesondere vorteilhaft, wenn die zu einer Prozessinstanz gehörenden Prozessschritte sortiert nach dem dritten Attribut an benachbarten Adressen in der Speichereinrichtung gespeichert werden. Dadurch kann bei der Prozessanalyse eine Verarbeitung der Prozessdaten als Stream ermöglicht werden.

Die Steueranweisungen können zumindest eine Extraktionsanweisung umfassen, die von der Runtime-Komponente an den ersten Extraktionsknoten gesendet wird, wobei die zumindest eine Extraktionsanweisung den ersten Extraktionsknoten veranlasst vorbestimmte Prozessdaten aus den Quelldaten zu extrahieren und die extrahierten Prozessdaten an den Speicherknoten des Server-Systems zu übertragen.

Der erste Extraktionsknoten kann angepasst sein, sich bei der Runtime-Komponente zu registrieren, derart, dass die Runtime-Komponente den registrierten ersten Extraktionsknoten eindeutig einem Client-System zuordnen kann.

Gemäß einer Ausführungsform der Erfindung kann in dem Server-System zumindest ein zweiter Extraktionsknoten ausgeführt werden, der gemäß der zumindest einen Extraktionsanweisung, die von der Runtime-Komponente an den zweiten Extraktionsknoten gesendet werden, aus den in dem zumindest einen Client-System gespeicherten Quelldaten Prozessdaten extrahiert und die extrahierten Prozessdaten an den Speicherknoten des Server-Systems überträgt.

Die Runtime-Komponente kann in Abhängigkeit von dem jeweiligen Client-System, in dem die Quelldaten gespeichert sind, die zumindest eine Extraktionsanweisung an den ersten Extraktionsknoten oder an den zweiten Extraktionsknoten senden.

Die extrahierten Prozessdaten und die Prozessprotokolle können jeweils mit einem dem jeweiligen Client-System zugeordneten Schlüssel verschlüsselt werden, wobei der Schlüssel beim Konfigurieren der Anwendung für das jeweilige Client-System erzeugt wird.

Die extrahierten Prozessdaten und die Prozessprotokolle können auf mehrere Speicherknoten verteilt werden.

Die Steueranweisungen können zumindest eine Transformationsanweisung umfassen, die von der Runtime-Komponente an den zumindest einen Transformationsknoten gesendet wird, wobei die zumindest eine Transformationsanweisung den jeweiligen Transformationsknoten veranlasst, aus vorbestimmten Prozessdaten das Prozessprotokoll zu erzeugen.

Die zumindest eine Transformationsanweisung kann parallel auf mehreren Transformationsknoten ausgeführt werden.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein Blockdiagramm einer IT-Infrastruktur anhand dessen das erfindungsgemäße Verfahren zum Erzeugen von Prozessprotokollen in einer verteilten IT-Infrastruktur beschrieben wird;
- Fig. 2: ein Blockdiagramm für eine konkretes Beispiel einer IT-Infrastruktur, bei der der Extraktionsknoten auf dem Server-System ausgeführt wird; und
- Fig. 3: ein Blockdiagramm für eine konkretes Beispiel einer IT-Infrastruktur, bei der der Extraktionsknoten auf dem Client-System ausgeführt wird.

### Detaillierte Beschreibung der Erfindung

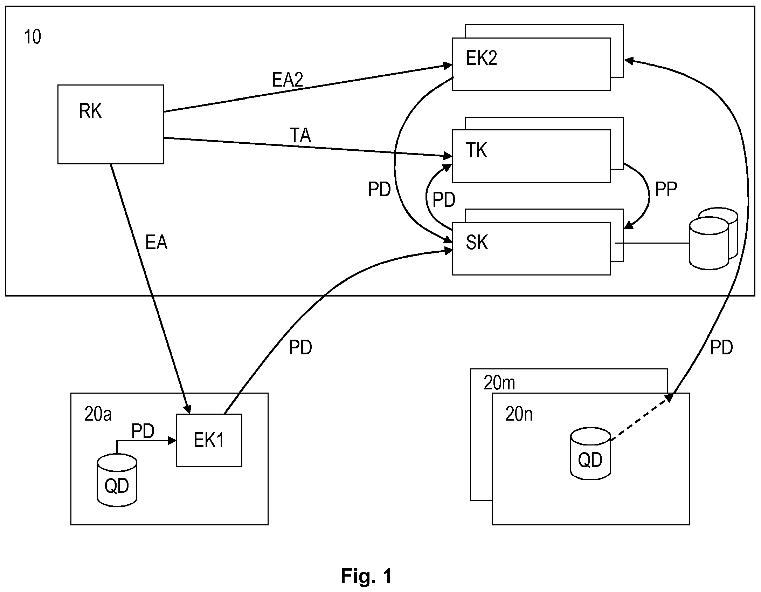

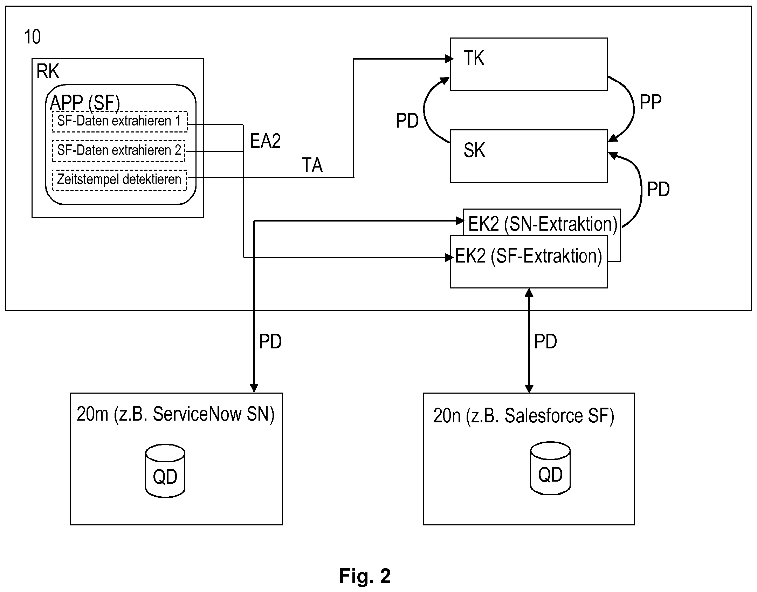

**Fig. 1****,** **Fig. 2** und **Fig. 3** zeigen jeweils ein Blockdiagramm eines erfindungsgemä-ßen IT-Systems. Das IT-System ist jeweils als verteilte Infrastruktur ausgestaltet und umfasst ein Server-System 10 und mindestens ein Client-System, wobei in Fig. 1 und Fig. 2 mehrere Client-Systeme 20a bis 20n gezeigt sind.

Die Client-Systeme 20a bis 20n sind über ein hier nicht gezeigtes Kommunikationsnetzwerk mit dem Server-System 10 verbunden. Das Kommunikationsnetzwerk kann beispielsweise das Internet sein.

Die Client-Systeme können jeweils ein Computersystem mit einer Speichereinrichtung und einer Datenverarbeitungseinrichtung umfassen. Die Client-Systeme sind hier jeweils einem bestimmten Unternehmen zugeordnet. Bei den Client-Systemen kann es sich jeweils um ein sogenanntes Cloud-Computing-System handeln.

Das Server-System umfasst ein Computersystem mit einer Speichereinrichtung und einer Datenverarbeitungseirichtung, wobei mehrere verteilte Speichereinrichtungen und mehrere verteilte Datenverarbeitungseirichtungen vorgesehen sein können. In einer Ausgestaltung der Erfindung handelt es sich bei dem Server-System 10 um ein sogenanntes Cloud-Computing-System, mit dem eine bestimmte IT-Infrastruktur wie beispielsweise Speicherplatz und Rechenleistung zur Verfügung gestellt wird.

In dem vorliegenden Beispiel ist das Server-System einem Dienstleister zugeordnet, der für mehrere Kunden eine Prozessanalyse durchführt. Die Client-Systeme sind jeweils einem Kunden des Dienstleisters zugeordnet.

Die Client-Systeme 20a bis 20n können das Server-System 10 quasi gleichzeitig und gemeinsam nutzen. In diesem Zusammenhang wird das Server-System 10 auch als "shared infrastructure" bezeichnet. "Gemeinsam nutzen" bedeutet, dass die Client-Systeme sowohl den Speicherplatz als auch die Rechenleistung des Server-System gemeinsam nutzen können bzw. dass das Server-System die gemeinsame Nutzung von Speicherplatz und Rechenleistung durch mehrere Client-Systeme ermöglicht.

In den Unternehmen (d.h. beim Kunden) werden Geschäftsprozesse oder technische Prozesse ausgeführt. Diese Geschäftsprozesse bzw. technischen Prozesse werden vollständig oder teilweise mit Hilfe des jeweiligen Client-Systems ausgeführt. Beispiele für einen Geschäftsprozess sind etwa die Auftragsabwicklung, Beschaffungsprozesse, oder dergleichen. Ein Geschäftsprozess besteht in der Regel aus mehreren Geschäftsprozessschritten. Ein ausgeführter Geschäftsprozess wird als Geschäftsprozessinstanz bezeichnet. Ein Beispiel für einen technischen Prozess ist etwa die Montage eines Kraftfahrzeuges, bei der mit Hilfe von Sensoren erfasst wird, welche Teile wann verbaut werden. Auch ein solcher technischer Prozess kann auch mehreren Prozessschritten bestehen.

Geschäftsprozesse und technische Prozesse werden nachfolgend gemeinsam als Prozesse bezeichnet. Ein ausgeführter Prozess wird als nachfolgend auch als Prozessinstanz bezeichnet. Die Schritte eines Prozesses bzw. einer Prozessinstanz werden nachfolgend auch als Prozessschritte bezeichnet. Die Prozessschritte sind eindeutig einer Prozessinstanz zugeordnet.

Beim Ausführen solcher Prozesse auf den Client-Systemen fallen in den Client-Systemen Daten an, die in den Client-Systemen gespeichert werden. Diese Daten werden in ihrer Gesamtheit Quelldaten genannt.

Bestandteil der Quelldaten sind Prozessdaten, die die ausgeführten Geschäftsprozesse bzw. die ausgeführten technischen Prozesse als solche beschreiben. Zu den Prozessdaten zählen beispielsweise der Start- und Endzeitpunkt eines Rechnungsprozesses oder das Datum eines Zahlungseinganges. Die Umsatzsteuernummer in einem Rechnungsprozess kann hingegen Bestandteil der Quelldaten des konkret ausgeführten Geschäftsprozesses sein, die aber nicht zu den Prozessdaten gehört. Bei technischen Prozessen können die Prozessdaten beispielsweise den Montagezeitpunkt und eine Kennung des Arbeiters, der die Montage durchführt umfassen.

Als Prozessdaten werden jene Daten der ausgeführten Prozessinstanzen bezeichnet, die für eine Analyse der ausgeführten Prozesse relevant sind.

Jede Prozessinstanz erzeugt in dem jeweiligen Clientsystem ihre eigenen Prozessdaten.

Mit der hier gezeigten verteilten IT-Infrastruktur und dem erfindungsgemäßen Verfahren wird es nunmehr ermöglicht, Prozessdaten, die in mehreren Client-Systemen bei der Ausführung von Prozessen anfallen und in den Clientsystemen gespeichert sind, effizient und ressourcenschonend zu analysieren, und insbesondere aus diesen Prozessdaten effizient und ressourcenschonend Prozessprotokolle zu erzeugen, die als Basis für eine effiziente Analyse der ausgeführten Prozesse verwendet werden können. Zudem wird eine einfache Provisionierung der Client-Systeme ermöglicht, um die Client-Systeme in die verteilte IT-Infrastruktur einzubinden.

Erfindungsgemäß werden die Prozessprotokolle in dem Server-System erzeugt und vom Server-System für die Analyse der Prozesse einem sogenannten Process Mining System zur Verfügung gestellt. Das Process Mining System kann hierbei selbst Bestandteil des Server-Systems sein.

Für das Erzeugen der Prozessprotokolle aus den in den Client-Systemen erzeugten und gespeicherten Prozessdaten müssen die Prozessdaten zunächst aus den Quelldaten der Client-Systeme extrahiert werden. Aus den extrahierten Prozessdaten können dann die Prozessprotokolle erzeugt werden.

Das Extrahieren der Prozessdaten aus den Quelldaten und das Erzeugen der Prozessprotokolle aus den extrahierten Prozessdaten werden mit Extraktionsknoten bzw. Transformationsknoten bewerkstelligt, wie nachfolgend beschrieben.

Bei den Client-Systemen wird erfindungsgemäß unterschieden zwischen
- Client-Systemen, bei denen das Server-System 10 direkt auf die Quelldaten zugreifen kann (etwa über bestimmte APIs (Applicaton Program Interface)), und
- Client-Systemen, bei denen das Server-System 10 keinen direkt Zugriff auf die Quelldaten hat.

Beispielhaft kann bei der in Fig. 1 gezeigten verteilten IT-Infrastruktur das Server-System nicht direkt auf die Quelldaten des Client-Systems 20a zugreifen, während ein direkter Zugriff auf die Quelldaten der Client-Systeme 20m, 20n möglich ist.

Bei dem in Fig. 2 gezeigten konkreten Beispiel einer verteilten IT-Infrastruktur kann das Server-System 10 direkt auf die Quelldaten der Client-Systeme 20m und 20n zugreifen. Bei dem Client-System 20n kann es sich beispielsweise um ein Salesforce-System (SF) handeln. Bei dem Client-System 20m kann es sich beispielsweise um ein ServiceNow-System (SN) handeln.

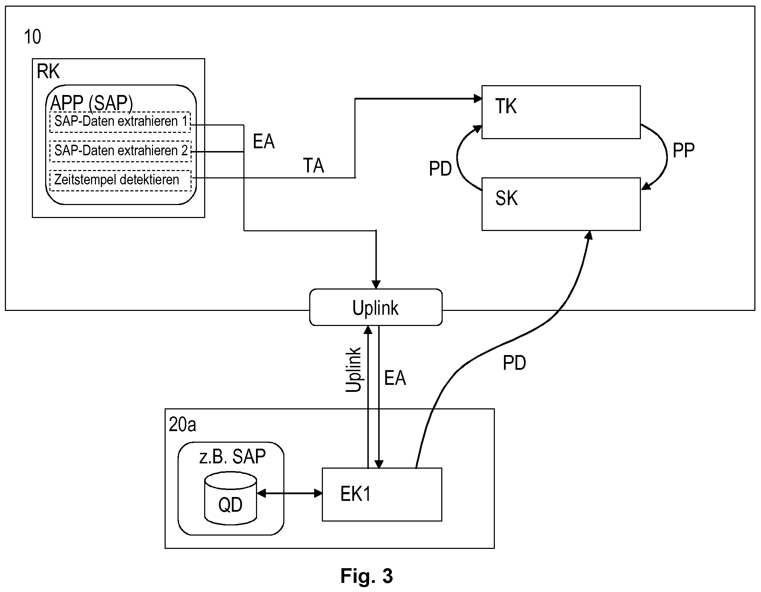

Bei dem in Fig. 3 gezeigten konkreten Beispiel einer verteilten IT-Infrastruktur kann das Server-System 10 nicht direkt auf die Quelldaten des Client-Systems 20a zugreifen, das beispielsweise ein SAP-System (SAP) sein kann.

Damit dennoch die Prozessdaten des Client-Systems 20a (auf das das Server-System 10 keinen direkten Zugriff hat) für das Erzeugen der Prozessprotokolle durch das Server-System verfügbar sind, ist es erfindungsgemäß vorgesehen in dem Client-System 20a einen ersten Extraktionsknoten EK1 vorzusehen, der in dem Client-System 20a ausgeführt wird. Der erste Extraktionsknoten EK1 ist angepasst, die in dem Client-System 20a gespeicherten Prozessdaten aus den Quelldaten QD des Client-System 20a zu extrahieren und die extrahierten Prozessdaten PD an das Server-System 10 zu übertragen. Hierdurch wird gewährleistet, dass das Server-System nach wie vor keinen Zugriff auf die Quelldaten des Client-Systems 20a hat. Andererseits wird es ermöglicht, dass dem Server-System die für das Erzeugen der Prozessprotokolle benötigten Prozessdaten zur Verfügung gestellt werden können.

Das Extrahieren der Prozessdaten aus den Quelldaten durch den ersten Extraktionsknoten EK1 erfolgt nach vorbestimmten Regeln, die angeben, welche Daten in welcher Form aus den Quelldaten QD zu extrahieren sind. Beispielswiese kann mit den Regeln angegeben werden, dass nur Prozessdaten aus solchen Quelldaten extrahiert werden sollen, die innerhalb eines bestimmten Zeitraumes in dem Client-System 20a erzeugt wurden.

Diese vorbestimmten Regeln können von einer Runtime-Komponente RK, die in dem Server-System 10 ausgeführt wird, im Rahmen einer Extraktionsanweisung EA oder im Rahmen mehrerer Extraktionsanweisungen EA dem ersten Extraktionsknoten EK1 zur Verfügung gestellt werden. Über einen Uplink (siehe Fig. 3), der beispielsweise das WebSocket-Protokoll verwendet, zwischen dem Server-System 10 und dem ersten Extraktionsknoten EK1 werden die Extraktionsanweisungen EA an den ersten Extraktionsknoten EK1 übertragen.

Die von dem ersten Extraktionsknoten EK1 extrahierten Prozessdaten PD werden an einen Speicherknoten SK des Server-Systems 10 übertragen. Der Speicherknoten SK wird auf dem Server-System 10 ausgeführt und ist angepasst, die von dem ersten Extraktionsknoten EK1 übertragenen Prozessdaten PD entgegenzunehmen und in einer dem Speicherknoten SK zugeordneten Speichereinrichtung zu speichern.

Vor dem Übertragen der Prozessdaten PD können diese von dem ersten Extraktionsknoten EK1 aufbereitet werden. Beispielsweise können die extrahierten Prozessdaten optimiert und/oder komprimiert werden, sodass eine optimierte Übertragung der Prozessdaten von dem Client-System 20a zu dem Server-System 10 ermöglicht wird. Zusätzlich oder alternativ können die extrahierten Prozessdaten vor der Übertragung in eine vorbestimmte Datenstruktur konvertiert werden. Die (ggf. aufbereiteten) Prozessdaten PD können über den Uplink an den Speicherknoten SK übertragen werden. Alternativ, wie in Fig. 3 gezeigt, können die Prozessdaten PD über eine eigens hierfür eingerichtete Verbindung zwischen dem Extraktionsknoten EK1 und dem Speicherknoten SK übertragen werden, beispielsweise unter Verwendung des http-Protokolls.

Nach der Übertragung der extrahierten Prozessdaten PD an den Speicherknoten SK stehen diese in dem Server-System 10 für das Erzeugen eines oder mehrerer Prozessprotokolle PP zur Verfügung.

Für das Erzeugen der Prozessprotokolle ist zumindest ein Transformationsknoten TK vorgesehen, der auf dem Server-System 10 ausgeführt wird und angepasst ist, aus den in dem Speicherknoten SK gespeicherten Prozessdaten ein oder mehrere Prozessprotokolle PP zu erzeugen und die erzeugten Prozessprotokolle zum Speichern an den Speicherknoten SK zu übertragen.

Die Prozessprotokolle PP werden von dem Transformationsknoten TK erfindungsgemäß gemäß einer vorbestimmten Datenstruktur erzeugt. Die vorbestimmte Datenstruktur umfasst zumindest:
- ein erstes Attribut, in dem eine eindeutige Kennung der Prozessinstanz des jeweiligen Prozessschrittes gespeichert ist,
- ein zweites Attribut, in dem eine Kennung des jeweiligen Prozessschrittes gespeichert ist, und
- ein drittes Attribut, in dem eine Reihenfolge der Prozessschritte innerhalb einer Prozessinstanz gespeichert ist.

Das erste Attribut ist eine eindeutige Kennung einer Prozessinstanz (z.B. einer konkreten Geschäftsprozessinstanz). Das zweite Attribut beschreibt einen Prozessschritt einer Prozessinstanz - dies kann eine eindeutige Kennung des Prozessschrittes oder eine Beschreibung des Prozessschrittes sein. Das dritte Attribut gibt die Reihenfolge der Prozessschritte innerhalb einer Prozessinstanz an.

Mit dem ersten Attribut werden alle Prozessschritte einer konkreten Prozessinstanz zugeordnet. In einer Ausgestaltung der Erfindung kann das erste Attribut auch eine zusammengesetzte eindeutige Kennung (zusammengesetzter Schlüssel) sein.

Allgemein gibt das dritte Attribut die Reihenfolge der Prozessschritte innerhalb einer Prozessinstanz an. In einer Ausgestaltung der Erfindung kann in dem dritten Attribut ein Zeitpunkt (Datum/Uhrzeit) gespeichert sein, der angibt, zu welchem Zeitpunkt der entsprechende Prozessschritt ausgeführt wurde. Die Verwendung von Zeitpunkten (z.B. Timestamps) hat den Vorteil, dass damit zeitbezogene Analysen durchgeführt werden können und die Prozessschritte einer Prozessinstanz dennoch sortiert werden können.

Erfindungsgemäß ist es vorgesehen, das Prozessprotokoll bzw. die darin gespeicherten Datensätze zunächst nach dem ersten Attribut und dann nach dem dritten Attribut zu sortieren und die Datenstruktur in dieser Gruppierung bzw. Sortierung durch den Speicherknoten SK in der Speichereinrichtung zu speichern. Vorteilhaft ist es hierbei, wenn die gemäß der Sortierung aufeinanderfolgenden Prozessschritte in der Speichereinrichtung in benachbarten Speicheradressen gespeichert werden. Vorteilhaft ist es weiterhin, wenn die Speichereinrichtung der Arbeitsspeicher ist.

Die Sortierung der Prozessschritte innerhalb einer Prozessinstanz und das benachbarte Speichern, wie vorstehend erläutert, haben den Vorteil, dass die Prozessinstanzen in gruppierter Form vorliegen. Hierdurch können die Prozessschritte in einem Stream sequenziell und in der richtigen Reihenfolge aus der Speichereinrichtung gelesen und verarbeitet werden. Zudem kann in vorteilhafter Weise eine Vorgänger/Nachfolger-Beziehung der Prozessschritte innerhalb einer Prozessinstanz berechnet werden.

Nachfolgend ist ein Beispiel eines Prozessprotokolls angegeben.

| Erstes Attribut | Zweites Attribut | Drittes Attribut |
|---|---|---|
| 1 | Create PO | 08:00 |
| 1 | Shipping | 10:00 |
| 1 | Payment | 11:00 |
| 2 | Create PO | 08:00 |
| 2 | Approve PO | 08:15 |
| 2 | Shipping | 08:30 |
| 2 | Payment | 09:00 |

Das Prozessprotokoll kann spaltenorientiert in der Speichereinrichtung gespeichert werden.

Darüber hinaus kann in dem Server-System ein zweiter Extraktionsknoten EK2 vorgesehen sein, der in dem Server-System 10 ausgeführt wird und der angepasst ist, Prozessdaten PD aus Quelldaten QD jener Client-Systeme 20m, 20n zu extrahieren, auf die das Server-System direkt zugreifen kann. Die übrige Funktionalität des zweiten Extraktionsknoten EK2 entspricht der dem ersten Extraktionsknoten EK1, d.h. die von dem zweiten Extraktionsknoten EK2 extrahierten Prozessdaten PD werden zum Speichern an den Speicherknoten SK übergeben (und vorher gegebenenfalls aufbereitet). Der zweite Extraktionsknoten EK2 kann hierbei spezielle APIs der Client-Systeme 20m, 20n nutzen, um auf die Quelldaten der Client-Systeme 20m, 20n zuzugreifen. Mit Hilfe von Extraktionsanweisungen EA2 wird den zweiten Extraktionsknoten EK2 mitgeteilt, welche Daten aus den Quelldaten extrahiert werden sollen.

Bei dem in Fig. 2 gezeigten konkreten Beispiel einer IT-Infrastruktur ist für jedes Client-System 20m und 20n jeweils ein zweiter Extraktionsknoten EK2 vorgesehen. Mit dem zweiten Extraktionsknoten EK2 (SF-Extraction) werden Daten aus dem Client-System 20n (Salesforce) extrahiert. Mit dem zweiten Extraktionsknoten EK2 (SN-Extraction) werden Daten aus dem Client-System 20m (ServiceNow) extrahiert. Beiden Extraktionsknoten EK2 können hierbei verschiedene, an das jeweilige Client-System angepasste Extraktionsanweisungen EA2 zur Verfügung gestellt werden.

Die vorstehend bereits erwähnte Runtime-Komponente RK wird in dem Server-System ausgeführt. Die Runtime-Komponente steuert und überwacht die Extraktionsknoten EK1, EK2, die Transformationsknoten TK und die Speicherknoten SK, wobei die Steuerung dieser Konten gemäß einem Satz von Steueranweisungen durchgeführt wird. Für jedes Client-System und für jede instanziierte Anwendung (die weiter unten näher beschrieben werden) kann ein separater Satz von Steueranweisungen vorgesehen sein.

Die Runtime-Komponente RK sendet an die einzelnen Knoten EK1, EK2, TK, SK Steueranweisungen, mit denen die jeweiligen Knoten veranlasst werden, eine bestimmte Aufgabe auszuführen. Beispielsweise kann die Runtime-Komponente RK eine Extraktionsanweisung EA2 an einen zweiten Extraktionsknoten EK2 senden, mit der der zweite Extraktionsknoten EK2 veranlasst wird Prozessdaten PD aus den Quelldaten QD des Client-Systems 20n zu extrahieren (wie beispielsweise in Fig. 2 gezeigt). Eine entsprechende Extraktionsanweisung EA kann die Runtime-Komponente auch an den ersten Extraktionsknoten EK1 senden. Mit einer Transformationsanweisung TA, die die Runtime-Komponente RK an den Transformationsknoten TK sendet, kann der Transformationsknoten TK veranlasst werden, aus vorbestimmten in dem Speicherknoten SK gespeicherten Prozessdaten PD ein Prozessprotokoll PP zu erzeugen und das erzeugte Prozessprotokoll dem Speicherknoten SK für das Speichern zu übergeben. Entsprechend kann auch der Speicherknoten SK mit einer Speicheranweisung (in den Figuren nicht gezeigt) gesteuert werden. So kann der Speicherknoten SK mit einer Speicheranweisung veranlasst werden, ein bestimmtes Prozessprotokoll für eine bestimme Art von Analyse aufzubereiten.

Vorteilhaft ist es, wenn mit den Steueranweisungen der Runtime-Komponente RK nur eine Client-System-bezogene Verarbeitung von Daten ermöglicht wird, d.h. mit einer Steueranweisung kann ein Knoten nur zur Verarbeitung von Daten eines bestimmten Client-Systems veranlasst werden. Dies kann ebenfalls mit der Runtime-Komponente gesteuert werden.

Die Steueranweisungen als solche definieren also, wie aus den in verschiedenen Client-Systemen gespeicherten Quelldaten Prozessprotokolle erzeugt werden und wie auf die Quelldaten der verschiedenen Client-Systeme zugegriffen werden kann.

In vorteilhafter Weise steuert die Runtime-Komponente RK den gesamten Ablauf von der Extraktion der Prozessdaten PD aus den Quelldaten QD bis zum Erstellen und Speichern der jeweiligen Prozessprotokolle PP.

Nachfolgend wird der Ablauf des Verfahrens von der Extraktion der Prozessdaten PD aus den Quelldaten QD bis zum Erstellen und Speichern der jeweiligen Prozessprotokolle PP zusammenfassend dargestellt:
- In einem ersten Schritt wird der Extraktionsknoten EK1 bzw. EK2 veranlasst, aus den Quelldaten eines bestimmten Client-Systems Prozessdaten PD zu extrahieren und die extrahierten Prozessdaten dem Speicherknoten SK zu übergeben. Die Extraktion der Prozessdaten PD wird von der Runtime-Komponente RK mit Hilfe einer oder mehrerer Extraktionsanweisungen EA, EA2 gesteuert, die an den jeweiligen Extraktionsknoten gesendet werden.

Der Extraktionsknoten EK1 kann beispielsweise auf einem Client-System ausgeführt werden, wenn das Server-System keinen direkten Zugriff auf die Quelldaten bzw. auf die Prozessdaten dieses Client-Systems hat (wie beispielsweise in Fig. 3 gezeigt). Damit muss am Client-System keine Schnittstelle bereitgestellt werden, mit der dem Sever-System Zugriff auf die Quelldaten QD des Client-Systems gewährt wird. Der Zugriff auf die Quelldaten QD, aus denen die Prozessdaten PD extrahiert werden, erfolgt ausschließlich durch den Extraktionsknoten EK1 des Client-Systems. Die Sicherheit der Daten kann so umfassend gewährleistet werden, da der Extraktionsknoten EK1 nur jene Daten (Prozessdaten) aus den Quelldaten extrahiert und an den Speicherknoten SK des Server-Systems überträgt, die für eine Prozessanalyse durch das Server-System unbedingt benötigt werden.

Wird der erste Extraktionsknoten EK1 auf einem Client-System ausgeführt, können außerdem für die Kommunikation zwischen dem ersten Extraktionsknoten EK1 und dem Speicherknoten SK optimierte Kommunikationsprotokolle für die Art der Verbindung (beispielsweise instabile Verbindung, Verbindung mit niedriger Bandbreite) sowie optimierte Austauschformate (beispielsweise Paketgröße, Kompression) verwendet werden, die gegenüber einem direkten Zugriff eine deutliche Verbesserung bezüglich Extraktionsperformance und -zuverlässigkeit ermöglichen. Durch die Reduktion der im Vergleich benötigten Bandbreite und des Speicherplatzes sind des Weiteren deutliche Einsparungen im Betrieb möglich.
- In einem zweiten Schritt nimmt der Speicherknoten SK die extrahierten Prozessdaten PD von dem Extraktionsknoten EK1, EK2 entgegen und speichert diese in einer dem Speicherknoten zugeordneten Speichereinrichtung. Optional kann der Speicherknoten SK die Prozessdaten vor dem Speichern aufbereiten bzw. in aufbereiteter Form speichern.
- In einem dritten Schritt erzeugt der Transformationsknoten TK aus den in dem Speicherknoten SK gespeicherten Prozessdaten PD ein Prozessprotokoll PP und übergibt das erzeugte Prozessprotokoll wieder an den Speicherknoten SK.
- In einem vierten Schritt nimmt der Speicherknoten SK das erzeugte Prozessprotokoll PP entgegen und speichert dieses als vorbestimmte Datenstruktur in der Speichereinrichtung.

Nach dem vierten Schritt steht das Prozessprotokoll zur Auswertung durch ein Process Mining System zur Verfügung.

Die Daten eines Client-Systems, d.h. die extrahierten Prozessdaten, und die aus diesen Prozessdaten erzeugten Prozessprotokolle werden vorzugsweise mit einem Client-spezifischen Schlüssel verschlüsselt, um einen Zugriff auf diese Daten durch andere Client-Systeme zu verhindern. Um den einzelnen Knoten den entsprechenden Zugriff auf die Daten zu ermöglichen, kann die Runtime-Komponente den Knoten den jeweils benötigten Schlüssel zum Entschlüsseln der Daten zur Verfügung stellen. Die Schlüssel selbst werden von der Runtime-Komponente RK verwaltet.

Damit der erste Extraktionsknoten EK1 Prozessdaten aus den Quelldaten extrahieren kann und die extrahierten Prozessdaten an den Speicherknoten SK des Server-Systems übergeben kann, ist es vorgesehen, dass sich der erste Extraktionsknoten EK1 bei der Runtime-Komponente RK registriert. Durch diese Registrierung weiß die Runtime-Komponente um welchen konkreten ersten Extraktionsknoten EK1 es sich handelt, welchem Clientsystem dieser Extraktionsknoten zugeordnet ist und welche Extraktionsanweisungen an diesen Extraktionsknoten gegebenenfalls gesendet werden können. Der Ablauf hierfür ist folgender:
- Der erste Extraktionsknoten EK1 bzw. das den ersten Extraktionsknoten EK1 repräsentierende Programm wird auf dem entsprechenden Clientsystem20a installiert.
- Das Programm generiert einen Schlüssel, der an die Runtime-Komponente übertragen wird und dort gespeichert wird.
- Die Runtime-Komponente erzeugt für diesen ersten Extraktionsknoten eine Registrierungs-URL, mit der sich der erste Extraktionsknoten an dem Server-System registriert.

Der erste Extraktionsknoten EK1 ist nun für das Server-System bzw. im Cluster verfügbar und kann von der Runtime-Komponente verwendet werden. Technisch gesehen kommuniziert die Runtime-Komponente nicht direkt mit dem ersten Extraktionsknoten, sondern ruft eine Cluster-Adresse auf. Der Cluster-Manager des Server-Systems koordiniert dann die Datenübertragung zwischen dem Server-System und dem ersten Extraktionsknoten.

Um eine Skalierbarkeit des Server-Systems zu erreichen, kann es vorgesehen sein, mehrere zweite Extraktionsknoten EK2, mehrere Transformationsknoten TK und mehrere Speicherknoten SK in dem Server-System zu verwenden und bei Bedarf weitere zweite Extraktionsknoten EK2, Transformationsknoten TK und Speicherknoten SK dem Server-System hinzuzufügen. Hierbei kann es vorteilhaft sein, die Prozessdaten bzw. die Prozessprotokolle in verschiedenen Speicherknoten zu speichern und für das Erzeugen unterschiedlicher Prozessprotokolle verschiedene Transformationsknoten vorzusehen. In diesem Fall kann die Runtime-Komponente angepasst sein, für die Ausführung des erfindungsgemäßen Verfahrens jeweils einen entsprechenden Knoten zu adressieren, d.h. die Runtime-Komponente kann einem Client-System einen oder mehrere Extraktionsknoten, Transformationsknoten und Speicherknoten zuordnen, die für die Verarbeitung der Daten dieses Client-Systems zu verwenden sind. Die Runtime-Komponente kann dann an diese Knoten die entsprechenden Steueranweisungen senden. Das bedeutet, dass die Runtime-Komponente die einzelnen Schritte des vorstehend erläuterten Verfahrens automatisch auf die jeweiligen Knoten verteilen kann.

Bei Vorhandensein mehrerer Extraktionsknoten, Transformationsknoten und Speicherknoten definieren die Steueranweisungen als solche, wie und mittels welcher Knoten aus den in verschiedenen Client-Systemen gespeicherten Quelldaten Prozessprotokolle erzeugt werden.

Erfindungsgemäß und als zentraler Bestandteil der Erfindung ist in dem Server-System ein Anwendungskatalog vorgesehen, mit dem eine Anzahl von Anwendungen verwaltet wird. Diese Anwendungen werden nachfolgend auch "Mining-Apps" genannt.

Jede Anwendung bzw. Mining-App besteht aus einem Installationsprogramm und dazugehörender Konfigurationsdaten. Mit Hilfe der Installationsprogramme können für jedes Client-System Mining-Apps instanziiert und in dem Server-System zur Ausführung gebracht werden. Die für die Client-Systeme instanziierten Mining-Apps werden von der Runtime-Komponente verwaltet. Die Konfigurationsdaten umfassen Informationen darüber, auf welchem Knoten welche Steueranweisungen auszuführen sind bzw. welche Schritte des erfindungsgemäßen Verfahrens auf welchem Knoten für welches Client-System auszuführen sind. Durch die Registrierung der ersten Extraktionsknoten sind auch diese Extraktionsknoten den jeweiligen Mining-Apps bekannt und können von diesen verwendet werden. Mit den instanziierten und einem Client-System zugeordneten Mining-Apps werden die Extraktionsknoten EK1, EK2, die Transformationsknoten TK und die Speicherknoten SK gesteuert und überwacht.

Weil jede Mining-App einem konkreten Client-System zugeordnet ist, sind auch die Steueranweisungen den jeweiligen Client-Systemen zugeordnet. Damit können beispielweise für ein erstes Client-System andere Extraktionsanweisungen bereitgestellt werden als für ein zweites Client-System.

Bei dem in Fig. 2 gezeigten konkreten Beispiel wird die Mining-App APP(SF) zur Ausführung gebracht. Diese Mining-App APP(SF) ist dem Client-System 20n zugeordnet und kann dementsprechend dem zweiten Extraktionsknoten EK2 (SF-Extraction) Extraktionsanweisungen EA2 zur Verfügung stellen, die für das Client-System 20n angepasst sind. Entsprechend kann die Mining-App APP(SF) dem Transformationsknoten TK Transformationsanweisungen TA zur Verfügung stellen, die angepasst sind, die aus dem Client-System 20n extrahierten Prozessdaten PD zu transformieren. Für das Client-System 20m gilt entsprechendes, d.h. es wird eine entsprechend für dieses Client-System angepasste Mining-App zu Ausführung gebracht.

Bei dem in Fig. 3 gezeigten konkreten Beispiel wird die Mining-App APP(SAP) zur Ausführung gebracht. Diese Mining-App APP(SAP) ist dem Client-System 20a (auf das das Server-System keinen direkten Zugriff hat) zugeordnet und kann dementsprechend dem ersten, auf dem Client-System 20a ausgeführten Extraktionsknoten EK1 Extraktionsanweisungen EA zur Verfügung stellen, die für das Client-System 20a angepasst sind. Entsprechend kann die Mining-App APP(SAP) dem Transformationsknoten TK Transformationsanweisung TA zur Verfügung stellen, die angepasst sind, die aus dem Client-System 20a extrahierten Prozessdaten PD zu transformieren.

Mit der erfindungsgemäßen verteilten Infrastruktur bzw. mit dem erfindungsgemäßen Verfahren ist es einem Server-System möglich Prozessdaten aus unterschiedlichen Client-Systemen zu extrahieren und aus den extrahierten Prozessdaten Prozessprotokolle zu erstellten, selbst wenn das Server-System auf die Quelldaten eines Client-Systems keinen direkten Zugriff hat. Hierbei wird sichergestellt, dass auf Prozessdaten und Prozessprotokolle nur durch das jeweils berechtigte Client-System zugegriffen werden kann.

Ferner kann die komplette Infrastruktur durch zusätzliche Extraktionsknoten erweitert werden, die von entsprechenden Mining-Apps gesteuert werden, um aus Quelldaten Prozessdaten zu extrahieren, auf die die Infrastruktur ansonsten keinen Zugriff hat. Zudem ist die Infrastruktur durch Hinzufügen zusätzlicher Transformationsknoten, Extraktionsknoten und Speicherknoten beliebig skalierbar.

Besonders vorteilhaft ist hierbei, dass die Infrastruktur besonders einfach um zusätzliche Client-Systeme erweitert werden kann. Das zusätzliche Client-System benötigt lediglich einen entsprechenden Extraktionsknoten und auf dem Server-System muss lediglich eine entsprechende Mining-App für dieses zusätzliche Client-System instanziiert und konfiguriert werden.

Mittels des Anwendungskatalogs können für jedes Client-System Mining-Apps dem Server-System hinzugefügt (durch Instanziieren der entsprechenden Mining-App) und dort ausgeführt werden, ohne dass der Anwendungskatalog pro Client-System angepasst werden muss. Mit Hilfe von Konfigurationsdaten kann jede Mining-App-Instanz an das jeweilige Client-System angepasst werden.

Damit wird ein Verfahren bereitgestellt, mit dem ein Server-System, insbesondere ein Cloud-System besonders effizient genutzt werden kann und mit dem eine größtmögliche Datensicherheit gewährleistet wird. So ist es beispielsweise möglich, dass einem spezifischen Client-System konkrete Extraktionsknoten, Transformationsknoten und Speicherknoten zugewiesen werden, die ausschließlich für das Erzeugen der Prozessprotokolle dieses Client-Systems verwendet werden können. Damit wird sichergestellt, dass die einzelnen Knoten ausschließlich Daten verarbeiten, die aus diesem Client-System stammen. Zudem kann so das Server-System effizienter genutzt werden, da nur jene Knoten ausgeführt werden müssen, die aktuell benötigt werden, d.h. es müssen nur für die auszuführenden Knoten die entsprechenden Ressourcen im Server-System reserviert werden.

Vorstehend ist das erfindungsgemäße Verfahren anhand einer oder mehrerer Client-Systeme beschreiben worden, in denen die Quelldaten, aus denen die Prozessdaten extrahiert werden, gespeichert sind.

Ein Client-System kann mehrere Computersysteme umfassen, wobei jedes Client-System einem Unternehmen oder Kunden zugeordnet ist.

### Bezugszeichen:

- 10: Server-System (z.B. Cloud bzw. Cloud-Computing-System)
- 20a...20m, 20n: Client-Systeme
- EA: Extraktionsanweisungen (Steueranweisungen)
- EA2: Extraktionsanweisungen (Steueranweisungen)
- EK1: erster Extraktionsknoten (ausgeführt auf dem Client-System)
- EK2: zweiter Extraktionsknoten (ausgeführt auf dem Server-System)
- PD: Prozessdaten
- PP: Prozessprotokolle
- QD: Quelldaten
- SK: Speicherknoten (mehrere)
- TA: Transformationsanweisung (Steueranweisungen)
- TK: Transformationsknoten (mehrere)

## Patentansprüche

1. Verfahren zum Erzeugen von Prozessprotokollen (PP) aus Prozessdaten (PD) in einem IT-System mit zumindest einem Extraktionsknoten (EK1; EK2), zumindest einem Speicherknoten (SK) und zumindest einem Transformationsknoten (TK), wobei die Prozessdaten (PD) in zumindest einem Client-System (20a...20m; 20n) des IT-Systems gespeichert sind, wobei das zumindest eine Client-System (20a...20m; 20n) über ein Kommunikationsnetzwerk mit einem Server-System (10) verbunden ist und wobei die Prozessdaten (PD) durch Ausführen zumindest eines Prozesses in dem zumindest einen Client-System erzeugt und in dem Client-System gespeichert werden und Bestandteil von in dem Client-System gespeicherten Quelldaten (QD) sind, wobei die Prozessdaten (PD) Daten einer Anzahl von Prozessinstanzen umfassen, wobei die Daten einer Prozessinstanz einen in dem Client-System ausgeführten und eine Anzahl von Prozessschritten umfassenden Prozess repräsentieren,
**dadurch gekennzeichnet, dass**
- in dem Server-System (10) des IT-Systems ein Anwendungskatalog ausgeführt wird und
- mit dem Anwendungskatalog eine Anzahl von Anwendungsvorlagen verwaltet werden, wobei jede Anwendungsvorlage ein Installationsprogramm und Konfigurationsdaten umfasst, wobei
- mit dem Installationsprogramm die jeweilige Anwendungsvorlage instanziiert, konfiguriert und in dem Server-System (10) als Anwendung zur Ausführung gebracht wird,
- die ausgeführten Anwendungen von einer Runtime-Komponente (RK), die auf dem Server-System (10) ausgeführt wird, überwacht und verwaltet werden, wobei die Runtime-Komponente (RK) Steueranweisungen an einzelne Knoten (EK1; EK2; TK; SK) sendet,
- die Konfigurationsdaten der jeweiligen Anwendung Informationen darüber umfassen, auf welchem Knoten welche Steueranweisungen ausgeführt werden,
- die Steueranweisungen zumindest eine Extraktionsanweisung (EA) umfassen, mit der der zumindest eine Extraktionsknoten (EK1; EK2) veranlasst wird, Prozessdaten (PD) aus den Quelldaten (QD) des zumindest einen Client-Systems zu extrahieren, und die extrahierten Prozessdaten (PD) an den zumindest einen Speicherknoten (SK) des Server-Systems (10) zu übertragen, und
- die Steueranweisungen zumindest eine Transformationsanweisung (TA) umfassen, mit der der zumindest eine Transformationsknoten (TK) veranlasst wird, aus vorbestimmten in dem zumindest einen Speicherknoten (SK) gespeicherten Prozessdaten (PD) ein Prozessprotokoll (PP) zu erzeugen und das erzeugte Prozessprotokoll (PP) dem zumindest einen Speicherknoten (SK) zum Speichern zu übergeben.

2. Verfahren nach Anspruch 1, wobei
- in zumindest einem Client-System (20a...20m; 20n) ein erster Extraktionsknoten (EK1) ausgeführt wird,
- in dem Server-System (10) zumindest ein Transformationsknoten (TK) und zumindest ein Speicherknoten (SK) ausgeführt werden,
- der erste Extraktionsknoten (EK1) gemäß den Steueranweisungen aus den im Client-System gespeicherten Quelldaten (QD) die Prozessdaten (PD) nach vorbestimmten Regeln extrahiert, wobei die vorbestimmten Regeln angeben, welche Daten in welcher Form aus den Quelldaten (QD) zu extrahieren sind, und die extrahierten Prozessdaten (PD) an den Speicherknoten (SK) des Server-Systems (10) überträgt,
- der Speicherknoten (SK) die extrahierten Prozessdaten (PD) von dem ersten Extraktionsknoten (EK1) entgegennimmt und in einer Speichereinrichtung des Server-Systems (10) speichert, und
- der Transformationsknoten (TK) gemäß den Steueranweisungen aus den in der Speichereinrichtung gespeicherten Prozessdaten (PD) das Prozessprotokoll erzeugt und das erzeugte Prozessprotokoll zum Speichern in der Speichereinrichtung an den Speicherknoten (SK) überträgt,
- wobei der Transformationsknoten (TK) das Prozessprotokoll (PP) gemäß einer vorbestimmten Datenstruktur erzeugt, wobei die vorbestimmte Datenstruktur zumindest umfasst:
- ein erstes Attribut, in dem eine eindeutige Kennung der Prozessinstanz des jeweiligen Prozessschrittes gespeichert ist;
- ein zweites Attribut, in dem eine Kennung des jeweiligen Prozessschrittes gespeichert ist; und
- ein drittes Attribut, in dem eine Reihenfolge der Prozessschritte innerhalb einer Prozessinstanz gespeichert ist;
wobei der Speicherknoten (SK) in der Datenstruktur die zu einer Prozessinstanz gehörenden Prozessschritte sortiert nach dem dritten Attribut in der Speichereinrichtung speichert.

3. Verfahren nach Anspruch 2, wobei der erster Extraktionsknoten (EK1) vorgibt, welches Kommunikationsprotokoll für das Übertragen der extrahierten Prozessdaten (PD) an den Speicherknoten (SK) des Server-Systems (10) verwendet wird.

4. Verfahren nach Anspruch 2, wobei der erste Extraktionsknoten (EK1) vor dem Übertragen der extrahierten Prozessdaten (PD) an den Speicherknoten (SK) des Server-Systems (10) die extrahierten Prozessdaten (PD) aufbereitet, insbesondere optimiert und/oder komprimiert.

5. Verfahren nach Anspruch 1, wobei das Server-System (10) von mehreren Client-Systemen (20a...20m; 20n) gemeinsam nutzbar ist.

6. Verfahren nach Anspruch 6, wobei die zu einer Prozessinstanz gehörenden Prozessschritte sortiert nach dem dritten Attribut an benachbarten Adressen in der Speichereinrichtung gespeichert werden.

7. Verfahren nach Anspruch 2, wobei die Steueranweisungen zumindest eine Extraktionsanweisung (EA) umfassen, die von der Runtime-Komponente (RK) an den ersten Extraktionsknoten (EK1) gesendet wird, wobei die zumindest eine Extraktionsanweisung (EA) den ersten Extraktionsknoten (EK1) veranlasst vorbestimmte Prozessdaten (PD) aus den Quelldaten (QD) nach vorbestimmten Regeln zu extrahieren, wobei die vorbestimmten Regeln angeben, welche Daten in welcher Form aus den Quelldaten (QD) zu extrahieren sind, und die extrahierten Prozessdaten (PD) an den Speicherknoten (SK) des Server-Systems (10) zu übertragen.

8. Verfahren nach Anspruch 2, wobei der erste Extraktionsknoten (EK1) angepasst ist, sich bei der Runtime-Komponente (RK) zu registrieren, derart, dass die Runtime-Komponente (RK) den registrierten ersten Extraktionsknoten (EK1) eindeutig einem Client-System (20a...20m; 20n) zuordnen kann.

9. Verfahren nach Anspruch 8, wobei in dem Server-System (10) zumindest ein zweiter Extraktionsknoten (EK2) ausgeführt wird, der gemäß der zumindest einen Extraktionsanweisung (EA), die von der Runtime-Komponente (RK) an den zweiten Extraktionsknoten (EK2) gesendet werden, aus den in dem zumindest einen Client-System (20a...20m; 20n) gespeicherten Quelldaten (QD) Prozessdaten (PD) nach vorbestimmten Regeln extrahiert, wobei die vorbestimmten Regeln angeben, welche Daten in welcher Form aus den Quelldaten (QD) zu extrahieren sind, und die extrahierten Prozessdaten (PD) an den Speicherknoten (SK) des Server-Systems (10) überträgt.

10. Verfahren nach Anspruch 9, wobei die Runtime-Komponente (RK) in Abhängigkeit von dem jeweiligen Client-System (20a...20m; 20n), in dem die Quelldaten (QD) gespeichert sind, die zumindest eine Extraktionsanweisung (EA) an den ersten Extraktionsknoten (EK1) oder an den zweiten Extraktionsknoten (EK2) sendet.

11. Verfahren nach Anspruch 2, wobei die extrahierten Prozessdaten (PD) und die Prozessprotokolle (PP) jeweils mit einem dem jeweiligen Client-System (20a...20m; 20n) zugeordneten Schlüssel verschlüsselt werden, wobei der Schlüssel beim Konfigurieren der Anwendung für das jeweilige Client-System erzeugt wird.

12. Verfahren nach Anspruch 2, wobei die extrahierten Prozessdaten (PD) und die Prozessprotokolle (PP) auf mehrere Speicherknoten (SK) verteilt werden.

13. Verfahren nach Anspruch 2, wobei die Steueranweisungen zumindest eine Transformationsanweisung (TA) umfasst, die von der Runtime-Komponente (RK) an den zumindest einen Transformationsknoten (TK) gesendet wird, wobei die zumindest eine Transformationsanweisung (TA) den jeweiligen Transformationsknoten (TK) veranlasst, aus vorbestimmten Prozessdaten (PD) das Prozessprotokoll (PP) zu erzeugen.

14. Verfahren nach Anspruch 13, wobei die zumindest eine Transformationsanweisung (TA) parallel auf mehreren Transformationsknoten (TK) ausgeführt wird.

## Claims

1. Method for generating process protocols (PP) from process data (PD) in an IT system with at least one extraction node (EK1; EK2), at least one storage node (SK) and at least one transformation node (TK), the process data (PD) being stored in at least one client system (20a...20m; 20n) of the IT system, the at least one client system (20a..20m; 20n) being connected to a server system (10) via a communication network, and the process data (PD) being generated by the execution of at least one process in the at least one client system and stored in the client system, and said data being part of source data (QD) stored in the client system, the process data (PD) comprising data of a number of process instances, the data of a process instance representing a process executed in the client system and comprising a number of process steps,
**characterized in that**
- an application catalog is executed in the server system (10) of the IT system, and
- a number of application templates are managed using the application catalog, each application template comprising an installation program and configuration data,
- the relevant application template being instantiated, configured and executed as an application in the server system (10) by the installation program,
- the executed applications are monitored and managed by a runtime component (RK) executed on the server system (10), the runtime component (RK) transmitting control instructions to individual nodes (EK1; EK2; TK; SK),
- the configuration data of the relevant application comprise information regarding which control instructions are executed on which node,
- the control instructions comprise at least one extraction instruction (EA), by means of which the at least one extraction node (EK1; EK2) is prompted to extract process data (PD) from the source data (QD) of the at least one client system, and to transmit the extracted process data (PD) to the at least one storage node (SK) of the server system (10), and
- the control instructions comprise at least one transformation instruction (TA), by means of which the at least one transformation node (TK) is prompted to generate a process protocol (PP) from predetermined process data (PD) stored in the at least one storage node (SK) and to transfer the generated process protocol (PP) to the at least one storage node (SK) for storage.

2. Method according to claim 1, wherein
- a first extraction node (EK1) is executed in at least one client system (20a...20m; 20n),
- at least one transformation node (TK) and at least one storage node (SK) are executed in the server system (10),
- the first extraction node (EK1), according to the control instructions, extracts the process data (PD) from the source data (QD) stored in the client system according to predetermined rules, the predetermined rules indicating what data are to be extracted from the source data (QD) in what form, and transmits the extracted process data (PD) to the storage node (SK) of the server system (10),
- the storage node (SK) receives the extracted process data (PD) from the first extraction node (EK1) and stores it in a storage device of the server system (10), and
- the transformation node (TK), according to the control instructions, generates the process protocol from the process data (PD) stored in the storage device and transmits the generated process protocol to the storage node (SK) for storage in the storage device,
- wherein the transformation node (TK) generates the process protocol (PP) according to a predetermined data structure, wherein the predetermined data structure at least comprises:
- a first attribute in which a unique identifier of the process instance of the relevant process step is stored;
- a second attribute, in which an identifier of the relevant process step is stored; and
- a third attribute, in which an order of the process steps within a process instance is stored;
wherein the storage node (SK), in the data structure, stores the process steps belonging to a process instance in the storage device, sorted according to the third attribute.

3. Method according to claim 2, wherein the first extraction node (EK1) specifies which communication protocol is used for transmitting the extracted process data (PD) to the storage node (SK) of the server system (10).

4. Method according to claim 2, wherein prior to the transmission of the extracted process data (PD) to the storage node (SK) of the server system (10), the first extraction node (EK1) prepares, in particular optimizes and/or compresses, the extracted process data (PD).

5. Method according to claim 1, wherein the server system (10) can be used jointly by a plurality of client systems (20a...20m; 20n).

6. Method according to claim 2, wherein the process steps belonging to a process instance are stored at adjacent addresses in the storage device, sorted according to the third attribute.

7. Method according to claim 2, wherein the control instructions comprise at least one extraction instruction (EA) transmitted by the runtime component (RK) to the first extraction node (EK1), wherein the at least one extraction instruction (EA) causes the first extraction node (EK1) to extract predetermined process data (PD) from the source data (QD) according to predetermined rules, the predetermined rules indicating what data are to be extracted from the source data (QD) in what form, and to transmit the extracted process data (PD) to the storage node (SK) of the server system (10).

8. Method according to claim 2, wherein the first extraction node (EK1) is adapted to register with the runtime component (RK), such that the runtime component (RK) can uniquely assign the registered first extraction node (EK1) to a client system (20a...20m; 20n).

9. Method according to claim 8, wherein at least one second extraction node (EK2) is executed in the server system (10), which node, according to the at least one extraction instruction (EA) sent by the runtime component (RK) to the second extraction node (EK2), extracts process data (PD) from the source data (QD) stored in the at least one client system (20a...20m; 20n) according to predetermined rules, the predetermined rules indicating what data are to be extracted from the source data (QD) in what form, and transmits the extracted process data (PD) to the storage node (SK) of the server system (10).

10. Method according to claim 9, wherein the runtime component (RK), depending on the relevant client system (20a...20m; 20n) in which the source data (QD) are stored, transmits the at least one extraction instruction (EA) to the first extraction node (EK1) or to the second extraction node (EK2).

11. Method according to claim 2, wherein the extracted process data (PD) and the process protocols (PP) are each encrypted with a key assigned to the relevant client system (20a...20m; 20n), wherein the key is generated for the relevant client system when the application is configured.

12. Method according to claim 2, wherein the extracted process data (PD) and process protocols (PP) are distributed over a plurality of storage nodes (SK).

13. Method according to claim 2, wherein the control instructions comprise at least one transformation instruction (TA) which is transmitted from the runtime component (RK) to the at least one transformation node (TK), wherein the at least one transformation instruction (TA) causes the relevant transformation node (TK) to generate the process protocol (PP) from predetermined process data (PD).

14. Method according to claim 13, wherein the at least one transformation instruction (TA) is executed in parallel on a plurality of transformation nodes (TK).

## Revendications

1. Procédé pour la génération de protocoles de processus (PP) à partir de données de processus (PD) dans un système informatique comportant au moins un noeud d'extraction (EK1 ; EK2), au moins un noeud de mémoire (SK) et au moins un noeud de transformation (TK), dans lequel les données de processus (PD) sont enregistrées dans au moins un système client (20a...20m ; 20n) du système informatique, dans lequel l'au moins un système client (20a...20m ; 20n) est connecté à un système de serveur (10) par l'intermédiaire d'un réseau de communication, et dans lequel les données de processus (PD) sont générées par l'exécution d'au moins un processus dans l'au moins un système client et enregistrées dans le système client et font partie de données source (QD) enregistrées dans le système client, dans lequel les données de processus (PD) comprennent des données d'un certain nombre d'instances de processus, dans lequel les données d'une instance de processus représentent un processus exécuté dans le système client et comprenant un certain nombre d'étapes de processus,
**caractérisé en ce que,**
- dans le système de serveur (10) du système informatique, un catalogue d'applications est exécuté, et
- le catalogue d'applications permet de gérer un certain nombre de modèles d'applications, dans lequel chaque modèle d'application comprend un programme d'installation et des données de configuration, dans lequel
- le modèle d'application respectif est instancié et configuré au moyen du programme d'installation, et mis en exécution en tant qu'application dans le système de serveur (10),
- les applications exécutées sont surveillées et gérées par un composant d'exécution (RK) qui est exécuté dans le système de serveur (10), dans lequel le composant d'exécution (RK) envoie des instructions de commande à des noeuds individuels (EK1 ; EK2 ; TK ; SK),
- les données de configuration de l'application respective comprennent des informations indiquant quelles instructions de commande sont exécutées sur quel noeud,
- les instructions de commande comprennent au moins une instruction d'extraction (EA) au moyen de laquelle l'au moins un noeud d'extraction (EK1 ; EK2) est amené à extraire les données de processus (PD) des données source (QD) de l'au moins un système client, et à transmettre les données de processus (PD) extraites à l'au moins un noeud de mémoire (SK) du système de serveur (10), et
- les instructions de commande comprennent au moins une instruction de transformation (TA), au moyen de laquelle l'au moins un noeud de transformation (TK) est amené à générer un protocole de processus (PP) à partir de données de processus (PD) prédéfinies enregistrées dans l'au moins un noeud de mémoire (SK) et à transmettre le protocole de processus (PP) généré à l'au moins un noeud de mémoire (SK) à des fins d'enregistrement.

2. Procédé selon la revendication 1, dans lequel
- un premier noeud d'extraction (EK1) est exécuté dans l'au moins un système client (20a...20m ; 20n),
- au moins un noeud de transformation (TK) et au moins un noeud de mémoire (SK) sont exécutés dans le système de serveur (10),
- le premier noeud d'extraction (EK1) extrait les données de processus (PD) selon des règles prédéfinies conformément aux instructions de commande, à partir des données source (QP) enregistrées dans le système client, dans lequel les règles prédéfinies indiquent quelles données doivent être extraites, sous quelle forme, à partir des données source (QD), et les données de processus (PD) extraites sont transmises au noeud de mémoire (SK) du système de serveur (10),
- le noeud de mémoire (SK) reçoit les données de processus (PD) extraites du premier noeud d'extraction (EK1) et les enregistre dans un dispositif de mémoire du système de serveur (10), et
- le noeud de transformation (TK) génère le protocole de processus conformément aux instructions de commande, à partir des données de processus (PD) enregistrées dans le dispositif de mémoire et transmet le protocole de processus généré au noeud de mémoire (SK) à des fins d'enregistrement dans le dispositif de mémoire,
- dans lequel le noeud de transformation (TK) génère le protocole de processus (PP) conformément à une structure de données prédéfinie, dans lequel la structure de données prédéfinie comprend au moins :
- un premier attribut dans lequel est enregistré un identifiant unique de l'instance de processus de l'étape de processus respective ;
- un deuxième attribut dans lequel est enregistré un identifiant de l'étape de processus respective ; et
- un troisième attribut dans lequel est enregistré un ordre des étapes de processus dans une instance de processus ;
dans lequel le noeud de mémoire (SK) de la structure de données enregistre les étapes de processus appartenant à une instance de processus, triées selon le troisième attribut, dans le dispositif de mémoire.

3. Procédé selon la revendication 2, dans lequel le premier noeud d'extraction (EK1) prédéfinit quel protocole de communication est utilisé pour la transmission des données de processus (PD) extraites au noeud de mémoire (SK) du système de serveur (10).

4. Procédé selon la revendication 2, dans lequel le premier noeud d'extraction (EK1) traite, en particulier optimise et/ou comprime, les données de processus (PD) extraites avant la transmission des données de processus (PD) extraites au noeud de mémoire (SK) du système de serveur (10).

5. Procédé selon la revendication 1, dans lequel le système de serveur (10) peut être utilisé conjointement par plusieurs systèmes client (20a... 20m ; 20n).

6. Procédé selon la revendication 2, dans lequel les étapes de processus appartenant à une instance de processus, triées selon le troisième attribut, sont enregistrées à des adresses voisines dans le dispositif de mémoire.

7. Procédé selon la revendication 2, dans lequel les instructions de commande comprennent au moins une instruction d'extraction (EA), laquelle est envoyée par le composant d'exécution (RK) au premier noeud d'extraction (EK1), dans lequel l'au moins une instruction d'extraction (EA) amène le premier noeud d'extraction (EK1) à extraire, à partir des données source (QD), des données de processus (PD) prédéfinies, selon des règles prédéfinies, dans lequel les règles prédéfinies indiquent quelles données doivent être extraites, sous quelle forme, à partir des données source (QD), et à transmettre les données de processus (PD) extraites au noeud de mémoire (SK) du système de serveur (10).

8. Procédé selon la revendication 2, dans lequel le premier noeud d'extraction (EK1) est adapté pour s'enregistrer dans le composant d'exécution (RK), de telle sorte que le composant d'exécution (RK) peut associer sans équivoque le premier noeud d'extraction (EK1) enregistré à un système client (20a...20m ; 20n).

9. Procédé selon la revendication 8, dans lequel au moins un second noeud d'extraction (EK2) est exécuté dans le système de serveur (10), lequel extrait des données de processus (PD) selon des règles prédéfinies conformément à l'au moins une instruction d'extraction (EA) qui est envoyée par le composant d'exécution (RK) au second noeud d'extraction (EK2), à partir des données source (QD) enregistrées dans l'au moins un système client (20a...20m ; 20n), dans lequel les règles prédéfinies indiquent quelles données doivent être extraites, sous quelle forme, à partir des données source (QD) et transmet les données de processus (PD) extraites au noeud de mémoire (SK) du système de serveur (10).

10. Procédé selon la revendication 9, dans lequel le composant d'exécution (RK), en fonction du système client (20a...20m ; 20n) respectif dans lequel les données source (QD) sont enregistrées, envoie l'au moins une instruction d'extraction (EA) au premier noeud d'extraction (EK1) ou au second noeud d'extraction (EK2).

11. Procédé selon la revendication 2, dans lequel les données de processus (PD) extraites et les protocoles de processus (PP) sont cryptés respectivement avec une clé associée au système client (20a...20m ; 20n) respectif, dans lequel la clé est générée lors de la configuration de l'application pour le système client respectif.

12. Procédé selon la revendication 2, dans lequel les données de processus (PD) extraites et les protocoles de processus (PP) sont distribués sur plusieurs noeuds de mémoire (SK).

13. Procédé selon la revendication 2, dans lequel les instructions de commande comprennent au moins une instruction de transformation (TA), laquelle est envoyée par le composant d'exécution (RK) à l'au moins un noeud de transformation (TK), dans lequel l'au moins une instruction de transformation (TA) amène le noeud de transformation (TK) respectif à générer le protocole de processus (PP) à partir de données de processus (PD) prédéfinies.

14. Procédé selon la revendication 13, dans lequel l'au moins une instruction de transformation (TA) est exécutée en parallèle sur plusieurs noeuds de transformation (TK).
